(19) Europäisches Patentamt
European Patent Office
Office européen des brevets

(11) EP 4 063 430 B1

(12) EUROPEAN PATENT SPECIFICATION

(45) Date of publication and mention of the grant of the patent:
**28.02.2024 Bulletin 2024/09**

(21) Application number: **21189453.0**

(22) Date of filing: **03.08.2021**

(51) International Patent Classification (IPC):
***C08G 73/10*** *(2006.01)* ***C08L 79/08*** *(2006.01)*

(52) Cooperative Patent Classification (CPC):
(C-Sets available)
**C08G 73/1007; C08G 73/1032; C08G 73/1067; C08L 79/08** (Cont.)

# (54) POLYIMIDE PRECURSOR SOLUTION, METHOD FOR PRODUCING POROUS POLYIMIDE FILM, AND POROUS POLYIMIDE FILM

POLYIMIDVORLÄUFERLÖSUNG, VERFAHREN ZUR HERSTELLUNG EINES PORÖSEN POLYIMIDFILMS UND PORÖSER POLYIMIDFILM

SOLUTION DE PRÉCURSEUR DE POLYIMIDE, PROCÉDÉ DE PRODUCTION DE FILM DE POLYIMIDE POREUX ET FILM DE POLYIMIDE POREUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2021 JP 2021052443**

(43) Date of publication of application:
**28.09.2022 Bulletin 2022/39**

(73) Proprietor: **Fujifilm Business Innovation Corp.**
**Tokyo (JP)**

(72) Inventor: **SEITOKU, Shigeru**
**Minamiashigara-shi (JP)**

(74) Representative: **Haseltine Lake Kempner LLP**
**Bürkleinstrasse 10**
**80538 München (DE)**

(56) References cited:
**US-A1- 2016 185 964**
**US-A1- 2018 244 023**
**US-A1- 2021 079 162**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 79/08, C08L 25/04**

## Description

BACKGROUND

Technical Field

The present invention relates to a polyimide precursor solution, a method for producing a porous polyimide film, and a porous polyimide film.

Related Art

JP-A-2020-104105 proposes "a method for producing a porous film, including a step of preparing a composition for producing a porous film containing at least one resin component selected from the group consisting of polyamic acid, polyimide, polyamide-imide precursor, polyamide-imide and polyether sulfone, and fine particles, in which the preparing step incudes a dispersion step of dispersing the fine particles by using a disperser including a pressurizing device for pressurizing a slurry containing the fine particles and a flow path having a cross-sectional area of 1,960 $\mu m^2$ or more and 785,000 $\mu m^2$ or less to pass the slurry in a state of being pressurized to 50 MPa or more through the flow path". US2021/0079162 discloses a polyimide precursor solution comprising a polyimide precursor, particles and an aqueous solvent comprising an amine compound and NMP (N-Methyl-2-Pyrrolidone).

SUMMARY

An object of the present invention is to provide a polyimide precursor solution, from which a polyimide film having a low resistance value is obtained, as compared with a case where in a polyimide precursor solution containing a polyimide precursor, particles, and an aqueous solvent containing an amine compound (A), an organic solvent (B) other than the amine compound (A) and water, the boiling point of the organic solvent (B) is lower than the boiling point of the amine compound (A), or the boiling point of the organic solvent (B) is lower than 200°C or higher than 300°C.
The present invention is defined in and by the appended claims.
According to a first aspect of the present invention, there is provided a polyimide precursor solution, comprising:

a polyimide precursor,
particles; and
an aqueous solvent containing an amine compound (A), an organic solvent (B) other than the amine compound (A) and water, wherein
the boiling point of the organic solvent (B) is higher than a boiling point of the amine compound (A), and the boiling point of the organic solvent (B) is 200°C or higher and 300°C or lower, and wherein the organic solvent (B) is at least one selected from the group consisting of a ketone-based solvent, an ester-based solvent, and a hydrocarbon-based solvent.

According to the invention, there is provided a polyimide precursor solution, from which a polyimide film having a low resistance value is obtained, as compared with a case where in a polyimide precursor solution containing a polyimide precursor, particles, and an aqueous solvent containing an amine compound (A), an organic solvent (B) other than the amine compound (A) and water, the boiling point of the organic solvent (B) is lower than the boiling point of the amine compound (A), or the boiling point of the organic solvent (B) is lower than 200°C or higher than 300°C.
Acording to the invention, there is provided a polyimide precursor solution, from which a polyimide film having a low resistance value is obtained, as compared with a case where the difference between the boiling point of the amine compound (A) and the boiling point of the organic solvent (B), which is represented by the formula: [the boiling point of the organic solvent (B)] - [the boiling point of the amine compound (A)], is lower than 10°C or higher than 200°C.
According to the invention, there is provided a polyimide precursor solution, from which a polyimide film having a low resistance value is obtained, as compared with a case where the difference between the boiling point of the amine compound (A) and the boiling point of the organic solvent (B), which is represented by the formula: [the boiling point of the organic solvent (B)] - [the boiling point of the amine compound (A)], is lower than 50°C or higher than 185°C.
According to the invention, there is provided a polyimide precursor solution, from which a polyimide film having a low resistance value is obtained, as compared with a case where the organic solvent (B) is an alcohol-based solvent.
According to the invention, there is provided a polyimide precursor solution, from which a polyimide film having a low resistance value is obtained, as compared with a case where the boiling point of the amine compound (A) is lower than 60°C or higher than 150°C.
According to the invention, there is provided a polyimide precursor solution, from which a polyimide film having

a low resistance value is obtained, as compared with a case where the amine compound (A) having a boiling point of 60°C or higher and 150°C or lower is an aromatic tertiary amine compound.

According to the invention, there is provided a polyimide precursor solution, from which a polyimide film having a low resistance value is obtained, as compared with a case where the content of the particles is less than 30 vol% or more than 80 vol% with respect to the solid content of the polyimide precursor solution.

According to the invention, there is provided a polyimide precursor solution, from which a polyimide film having a low resistance value is obtained, as compared with a case where the content of the organic solvent (B) with respect to the amine compound (A) is less than 1 mass% or more than 30 mass%.

According to the invention, there is provided a method for producing a porous polyimide film, from which a porous polyimide film having a low resistance value is obtained, as compared with a case where in a polyimide precursor solution containing a polyimide precursor, particles, and an aqueous solvent containing an amine compound (A), an organic solvent (B) other than the amine compound (A) and water, the boiling point of the organic solvent (B) is lower than the boiling point of the amine compound (A), or the boiling point of the organic solvent (B) is lower than 200°C or higher than 300°C.

## BRIEF DESCRIPTION OF THE DRAWINGS

Exemplary embodiment(s) of the present invention will be described in detail based on the following figure, wherein:

FIGURE is a schematic diagram showing a form of a porous polyimide film according to the present exemplary embodiment.

## DETAILED DESCRIPTION

Hereinafter, an exemplary embodiment as an example of the present invention will be described.

These descriptions and Examples illustrate the exemplary embodiment, and do not limit the scope of the exemplary embodiment.

In the numerical ranges described in stages in the present description, an upper limit or a lower limit described in one numerical range may be replaced with an upper limit or a lower limit of the numerical range described in other stages.

In the present description, unless otherwise specified, the "boiling point" refers to a boiling point under atmospheric pressure (101.3 kPa).

In the present exemplary embodiment, the term "film" is a concept that includes not only what is generally called "film" but also what is generally called "sheet".

### <Polyimide Precursor Solution>

A polyimide precursor solution according to the present exemplary embodiment contains: a polyimide precursor; particles; and an aqueous solvent containing an amine compound (A), an organic solvent (B) other than the amine compound (A) and water.

A boiling point of the organic solvent (B) is higher than a boiling point of the amine compound (A), and the boiling point of the organic solvent (B) is 200°C or higher and 300°C or lower. The organic solvent (B) is at least one selected from the group consisting of a ketone-based solvent, an ester-based solvent, and a hydrocarbon-based solvent.

With the above configuration, the polyimide precursor solution according to the present exemplary embodiment becomes a polyimide precursor solution from which a polyimide film having a low resistance value is obtained. The reasons are presumed as follows.

The porous polyimide film may be required to have low resistance depending on the application. In order to reduce the resistance value of the porous polyimide film, for example, a method of increasing the ratio of communication pores is mentioned.

Here, the porous polyimide film is produced by coating a polyimide precursor solution containing particles onto a substrate to form a coating film, drying the coating film to form a dried film, firing the dried film, and removing the particles. In order to increase the ratio of communication pores in the porous polyimide film, in the production of the porous polyimide film, it is preferable to enhance the dispersibility of the particles in the dried film when firing the dried film, so that the particles are present in the dried film in a nearly uniform state. However, when firing the dried film, phenomena such as particles agglomeration in the dried film and particles precipitation in the coating film due to a decrease in fluidity of the particles in the dried film may occur, making it difficult to obtain a porous polyimide film having a high ratio of communication pores.

The polyimide precursor solution according to the present exemplary embodiment contains an aqueous solvent containing an organic solvent (B). In addition, the boiling point of the organic solvent (B) is higher than the boiling point

of the amine compound (A), and the boiling point of the organic solvent (B) is 200°C or higher and 300°C or lower. Here, the amine compound (A) is a compound having a function of catalyzing the imidization reaction, and gradually volatilizes from the dried film during firing. When the organic solvent (B) having a boiling point higher than that of the amine compound (A) is contained, while the amine compound (A) as a catalyst is present in the dried film, the organic solvent (B) is also present in the coating film. That is, when firing the dried film, the organic solvent (B) is present in the dried film while imidization is in progress, so that it is easy to maintain a state where the fluidity of the particles is high from the formation of the dried film to the end of the imidization. In addition, when the boiling point of the organic solvent (B) is set to 200°C or higher and 300°C or lower, the volatility of the organic solvent (B) is reduced, and it is easier to maintain a state where the fluidity of the particles is high from the formation of the dried film to the end of the imidization. Therefore, the ratio of communication pores in the porous polyimide film obtained from the polyimide precursor solution according to the present exemplary embodiment tends to increase.

From the above, it is presumed that the polyimide precursor solution according to the present exemplary embodiment becomes a polyimide precursor solution from which a polyimide film having a low resistance value is obtained.

Here, in the polyimide precursor solution according to the present exemplary embodiment, the difference between the boiling point of the amine compound (A) and the boiling point of the organic solvent (B), which is represented by a formula: [the boiling point of the organic solvent (B)] - [the boiling point of the amine compound (A)], is preferably 10°C or higher and 200°C or lower.

With the above configuration, the polyimide precursor solution according to the present exemplary embodiment becomes a polyimide precursor solution from which a polyimide film having a low resistance value is obtained. The reasons are presumed as follows.

The polyimide precursor solution according to the present exemplary embodiment contains an aqueous solvent containing an organic solvent (B). In addition, when the difference between the boiling point of the amine compound (A) and the boiling point of the organic solvent (B), which is represented by a formula: [the boiling point of the organic solvent (B)] - [the boiling point of the amine compound (A)], is set to 10°C or higher and 200°C or lower, the organic solvent (B) has a boiling point higher than that of the amine compound (A). That is, during firing, the organic solvent (B) is present in the dried film while imidization is in progress, so that it is easy to maintain a state where the fluidity of the particles in the dried film is high. Therefore, it is easier to maintain a state where the fluidity of the particles is high from the formation of the dried film to the end of the imidization. In addition, when the difference between the boiling point of the amine compound (A) and the boiling point of the organic solvent (B) is set to the above range, the volatility of the organic solvent (B) is reduced, and it is easier to maintain state where the fluidity of the particles is high from the formation of the dried film to the end of the imidization. Therefore, the ratio of communication pores in the porous polyimide film obtained from the polyimide precursor solution according to the present exemplary embodiment tends to increase.

From the above, it is presumed that when the difference between the boiling point of the amine compound (A) and the boiling point of the organic solvent (B), which is represented by the formula: [the boiling point of the organic solvent (B)] - [the boiling point of the amine compound (A)], is set to 10°C or higher and 200°C or lower, the polyimide precursor solution according to the present exemplary embodiment becomes a polyimide precursor solution from which a polyimide film having a low resistance value is obtained.

(Polyimide Precursor)

The polyimide precursor is obtained by polymerizing a tetracarboxylic dianhydride and a diamine compound. Specifically, the polyimide precursor is a resin (that is, polyamic acid) having a repeating unit represented by the general formula (I).

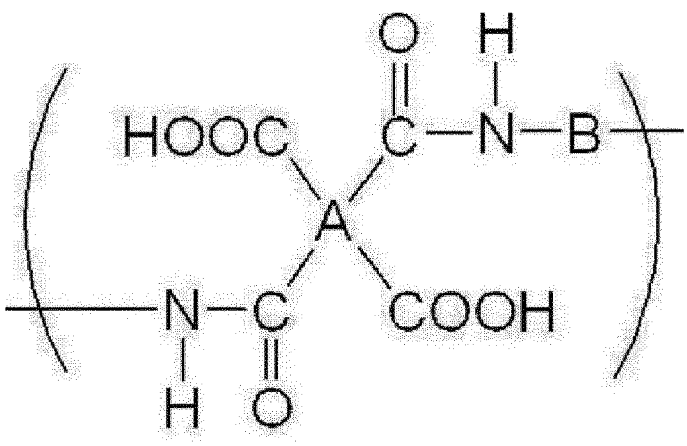

(I)

In the general formula (I), A represents a tetravalent organic group and B represents a divalent organic group.

Here, in the general formula (I), the tetravalent organic group represented by A is a residue obtained by removing four carboxyl groups from a tetracarboxylic dianhydride as a raw material.

On the other hand, the divalent organic group represented by B is a residue obtained by removing two amino groups from a diamine compound as a raw material.

That is, the polyimide precursor having a repeating unit represented by the general formula (I) is a polymer of a tetracarboxylic dianhydride and a diamine compound.

Examples of the tetracarboxylic dianhydride include both aromatic and aliphatic tetracarboxylic dianhydrides, and the aromatic tetracarboxylic dianhydride is preferred. That is, in the general formula (I), the tetravalent organic group represented by A is preferably an aromatic organic group.

Examples of the aromatic tetracarboxylic dianhydride include pyromellitic dianhydride, 3,3',4,4'-benzophenone tetracarboxylic dianhydride, 3,3',4,4'-diphenylsulfonetetracarboxylic dianhydride, 4,4'-oxydiphthalic anhydride, 3,4'-oxydiphthalic anhydride, 3,3',4,4'-biphenyltetracarboxylic dianhydride, 2,3,3',4'-biphenyltetracarboxylic dianhydride, 4,4'-(hexafluoroisopropylidene)diphthalic anhydride, 2,2-bis(3,4-dicarboxyphenyl)propane dianhydride, bis(3,4-dicarboxyphenyl)methane dianhydride, 1,4-bis(3,4-dicarboxyphenoxy)benzene dianhydride, 1,4-bis(2,3-dicarboxyphenoxy)benzene dianhydride, p-phenylenebis(trimellitate anhydride), m-phenylenebis(trimellitate anhydride), 2,2-bis[4-(3,4-dicarboxyphenoxy)phenyl]propane dianhydride, naphthalene-1,4,5,8-tetracarboxylic dianhydride, naphthalene-2,3,6,7-tetracarboxylic dianhydride, 9,9-bis(3,4-dicarboxyphenyl)fluorene dianhydride, 4,4'-diphenyl ether bis(trimellitate anhydride), 4,4'-diphenylmethanebis(trimellitate anhydride), 4,4'-bis(3,4-dicarboxyphenoxy)diphenylsulfide dianhydride, 4,4'-bis(3,4-dicarboxyphenoxy)diphenylsulfone dianhydride, 4,4'-bis(3,4-dicarboxyphenoxy)diphenyl ether dianhydride, 2,2-bis(4-hydroxyphenyl) propanebis(trimellitate anhydride), p-terphenyltetracarboxylic dianhydride, and m-terphenyltetracarboxylic dianhydride.

Examples of the aliphatic tetracarboxylic dianhydride include: aliphatic or alicyclic tetracarboxylic dianhydrides such as butanetetracarboxylic dianhydride, 1,2,3,4-cyclobutanetetracarboxylic dianhydride, 1,3-dimethyl-1,2,3,4-cyclobutanetetracarboxylic dianhydride, 1,2,3,4-cyclopentanetetracarboxylic dianhydride, 2,3,5-tricarboxycyclopentyl acetate dianhydride, 3,5,6-tricarboxynorbonan-2-acetate dianhydride, 2,3,4,5-tetrahydrofuran tetracarboxylic dianhydride, 5-(2,5-dioxotetrahydrofuryl)-3-methyl-3-cyclohexene-1,2-dicarboxylic dianhydride, and bicyclo[2,2,2]-octo-7-ene-2,3,5,6-tetracarboxylic dianhydride; and aliphatic tetracarboxylic dianhydrides having an aromatic ring such as 1,3,3a,4,5,9b-hexahydro-5-(tetrahydro -2,5-dioxo-3-franyl)-naphtho[1,2-c]furan-1,3-dione, 1,3,3a,4,5,9b-hexahydro-5-methyl-5-(tetrahydro-2,5-dioxo-3-franyl)-naphtho[1,2-c]furan-1,3-dione, and 1,3,3a,4,5,9b-hexahydro-8-methyl-5-(tetrahydro-2,5-dioxo-3-franyl)-naphtho[1,2-c]furan-1,3-dione.

Among these, the tetracarboxylic dianhydride is preferably an aromatic tetracarboxylic dianhydride. Specifically, preferred are pyromellitic dianhydride, 3,3',4,4'-benzophenone tetracarboxylic dianhydride, 4,4'-oxydiphthalic anhydride, 3,3', 4,4'-biphenyltetracarboxylic dianhydride, and 2,3,3',4'-biphenyltetracarboxylic dianhydride, more preferred are pyromellitic dianhydride, 3,3',4,4'-biphenyltetracarboxylic dianhydride, and 3,3',4,4'-benzophenone tetracarboxylic dianhydride, and particularly preferred is 3,3',4,4'-biphenyltetracarboxylic dianhydride.

The tetracarboxylic dianhydride may be used alone or in combination of two or more thereof.

When two or more tetracarboxylic dianhydrides are used in combination, aromatic tetracarboxylic dianhydrides

or aliphatic tetracarboxylic dianhydrides may be used in combination, or an aromatic tetracarboxylic dianhydride and an aliphatic tetracarboxylic dianhydride may be used in combination.

On the other hand, the diamine compound is a diamine compound having two amino groups in the molecular structure thereof. Examples of the diamine compound include both aromatic and aliphatic diamine compounds, and the aromatic diamine compound is preferred. That is, in the general formula (I), the divalent organic group represented by B is preferably an aromatic organic group.

Examples of the diamine compound include: aromatic diamines such as p-phenylenediamine, m-phenylenediamine, 4,4'-diaminodiphenylmethane, 4,4'-diaminodiphenylethane, 4,4'-diaminodiphenyl ether, 4,4'-diaminodiphenyl sulfide, 4,4'-diaminodiphenyl sulfone, 1,5-diaminonaphthalene, 3,3-dimethyl-4,4'-diaminobiphenyl, 5-amino-1-(4'-aminophenyl)-1,3,3-trimethylindane, 6-amino-1-(4'-aminophenyl)-1,3,3-trimethylindane, 4,4'-diaminobenzanilide, 3,5-diamino-3'-trifluoromethylbenzanilide, 3,5-diamino-4'-trifluoromethylbenzanilide, 3,4'-diaminodiphenyl ether, 2,7-diaminofluorene, 2,2-bis(4-aminophenyl)hexafluoropropane, 4,4'-methylene-bis (2-chloroaniline), 2,2',5,5'-tetrachloro-4,4'-diaminobiphenyl, 2,2'-dichloro-4,4'-diamino-5,5'-dimethoxybiphenyl, 3,3'-dimethoxy-4,4'-diaminobiphenyl, 4,4'-diamino-2,2'-bis(trifluoromethyl)biphenyl, 2,2-bis[4-(4-aminophenoxy) phenyl] propane, 2,2-bis[4-(4-aminophenoxy) phenyl]hexafluoropropane, 1,4-bis (4-aminophenoxy)benzene, 4,4'-bis(4-aminophenoxy)-biphenyl, 1,3'-bis (4-aminophenoxy) benzene, 9,9-bis(4-aminophenyl)fluorene, 4,4'-(p-phenylene isopropylidene)bisaniline, 4,4'-(m-phenylene isopropylidene)bisaniline, 2,2'-bis[4-(4-amino-2-trifluoromethylphenoxy)phenyl]hexafluoropropane, and 4,4'-bis[4-(4-amino-2-trifluoromethyl)phenoxy]-octafluorobiphenyl; aromatic diamines having two amino groups bonded to an aromatic ring and a hetero atom other than the nitrogen atom of the amino groups, such as diaminotetraphenylthiophene; and aliphatic diamines and alicyclic diamines such as 1,1-methaxylylenediamine, 1,3-propane diamine, tetramethylenediamine, pentamethylenediamine, octamethylenediamine, nonamethylenediamine, 4,4-diaminoheptamethylenediamine, 1,4-diaminocyclohexane, isophorone diamine, tetrahydrodicyclopentadienylenediamine, hexahydro-4,7-methanoindanylene dimethylenediamine, tricyclo[6,2,1,$0^{2.7}$]-undecylenic dimethyldiamine, and 4,4'-methylenebis(cyclohexylamine).

Among these, the diamine compound is preferably an aromatic diamine compound. Specifically, preferred are p-phenylenediamine, m-phenylenediamine, 4,4'-diaminodiphenylmethane, 4,4'-diaminodiphenyl ether, 3,4'-diaminodiphenyl ether, 4,4'-diaminodiphenyl sulfide, and 4,4'-diaminodiphenyl sulfone, and particularly preferred are 4,4'-diaminodiphenyl ether and p-phenylenediamine.

The diamine compound may be used alone or in combination of two or more thereof. When two or more diamine compounds are used in combination, aromatic diamine compounds or aliphatic diamine compounds may be used in combination, or an aromatic diamine compound and an aliphatic diamine compound may be used in combination.

Further, in order to adjust the handleability and mechanical characteristics of the obtained polyimide, it may be preferable to perform copolymerization using two or more kinds of tetracarboxylic dianhydrides and/or diamine compounds.

Examples of a combination of copolymerization include copolymerization of a tetracarboxylic dianhydride and/or a diamine compound having one aromatic ring in the chemical structure with a tetracarboxylic dianhydride and/or a diamine compound having two or more aromatic rings in the chemical structure, or copolymerization of an aromatic tetracarboxylic dianhydride and/or a diamine compound with a carboxylic acid dianhydride and/or a diamine compound having flexible linking groups such as an alkylene group, an alkyleneoxy group, and a siloxane group.

The number average molecular weight of the polyimide precursor is preferably 1000 or more and 150,000 or less, more preferably 5000 or more and 130,000 or less, and still more preferably 10,000 or more and 100,000 or less.

When the number average molecular weight of the polyimide precursor is within the above range, a decrease in solubility of the polyimide precursor in a solvent is prevented, and the film-forming property is easily ensured.

The number average molecular weight of the polyimide precursor is measured by a gel permeation chromatography (GPC) method under the following measurement conditions.

- Column: Tosoh TSKgel$\alpha$-M (7.8 mm I.D $\times$ 30 cm)
- Eluent: DMF (dimethylformamide)/30 mM LiBr/60 mM phosphoric acid · Flow rate: 0.6 mL/min
- Injection amount: 60 $\mu$L
- Detector: RI (Differential refractometer)

The content (that is, concentration) of the polyimide precursor is preferably 0.1 mass% or more and 40 mass% or less, more preferably 0.5 mass% or more and 25 mass% or less, and still more preferably 1 mass% or more and 20 mass% or less, with respect to the entire polyimide precursor solution.

(Particles)

The particles refer to those in a dispersed state without being dissolved.

The particles may be any particles that do not dissolve in the polyimide precursor solution according to the

present exemplary embodiment, and the material of the particles is not particularly limited, and the particles are roughly classified into resin particles and inorganic particles, which will be described later.

Here, in the present exemplary embodiment, the expression "the particles are not dissolved" means that the particles are not dissolved in a target liquid (specifically, the aqueous solvent contained in the polyimide precursor solution) at 25°C, and that the particles are dissolved in the range of 3 mass% or less with respect to the target liquid.

The particles may remain contained in a polyimide film produced by using the polyimide precursor solution according to the present exemplary embodiment, or may be removed from the produced polyimide film.

The volume average particle diameter D50v of the particles is not particularly limited. The volume average particle diameter D50v of the particles is preferably 0.05 μm or more and 10 μm or less, for example. The lower limit of the volume average particle diameter D50v of the particles is preferably 0.2 μm or more, more preferably 0.3 μm or more, still more preferably 0.4 μm or more, and particularly preferably 0.5 μm or more. In addition, the upper limit of the volume average particle diameter D50v of the particles is preferably 7 μm or less, more preferably 5 μm or less, still more preferably 3 μm or less, and particularly preferably 2 μm or less.

The volume particle size distribution index (GSDv) of the particles is preferably 1.30 or less, more preferably 1.25 or less, and most preferably 1.20 or less.

The particle size distribution of the particles in the polyimide precursor solution according to the present exemplary embodiment is measured by the following method.

The composition to be measured is diluted and the particle size distribution of particles in the liquid is measured using a Coulter counter LS13 (manufactured by Beckman Coulter). Based on the measured particle size distribution, the particle size distribution is measured by drawing a volume cumulative distribution from the small diameter side with respect to the divided particle size range (so-called channel).

Then, in the volume cumulative distribution drawn from the small diameter side, the particle diameter corresponding to the cumulative percentage of 16% is the volume particle diameter D16v, the particle diameter corresponding to the cumulative percentage of 50% is the volume average particle diameter D50v, and the particle diameter corresponding to the cumulative percentage of 84% is the volume particle diameter D84v.

Then, the volume particle size distribution index (GSDv) of the particles is calculated as $(D84v/D16v)^{1/2}$ from the particle size distribution obtained by the above method.

When the particle size distribution of the particles in the polyimide precursor solution according to the present exemplary embodiment is difficult to measure by the above method, it may be measured by a method such as a dynamic light scattering method.

The shape of the particles is preferably spherical.

When the spherical particles are used and the spherical particles are removed from the polyimide film to prepare a porous polyimide film, a porous polyimide film having spherical pores is obtained.

In the present exemplary embodiment, the "spherical" in particles includes both a spherical shape and a substantially spherical shape (that is, a shape close to a spherical shape).

The "spherical" specifically means that particles having a ratio major axis/minor axis of major axis to minor axis of 1 or more and less than 1.5 is present in a ratio of more than 80%. The ratio of particles having a ratio major axis/minor axis of major axis to minor axis of 1 or more and less than 1.5 is preferably 90% or more. The closer the ratio of major axis to minor axis is 1, the closer the particle becomes to a spherical shape.

As the particles, either resin particles or inorganic particles may be used, and for example, it is preferable to use resin particles for the following reasons.

Since both the resin particles and the polyimide precursor are organic materials, the particle dispersibility in the coating film by the polyimide precursor solution, the interfacial adhesion with the polyimide precursor, etc. are improved as compared with the case where the inorganic particles are used. In an imidization step when producing the polyimide film, since the resin particles easily absorb the volume shrinkage, it is easy to prevent cracks generated in the polyimide film due to the volume shrinkage.

Hereinafter, specific materials of the resin particles and the inorganic particles will be described.

(Resin Particles)

The resin particles are not particularly limited as long as they do not dissolve in the polyimide precursor solution (specifically, the aqueous solvent contained in the polyimide precursor solution). It is preferable that the resin particles are made of a resin other than polyimide.

Specific examples of the resin particles include resin particles such as: polystyrenes; poly(meth)acrylic acids; vinyl-based resins represented by polyvinyl acetate, polyvinyl alcohol, polyvinyl butyral, polyvinyl ether, etc.; condensation resins represented by polyesters, polyurethanes, polyamides, etc.; hydrocarbon-based resins represented by polyethylene, polypropylene, polybutadiene, etc.; and fluorine-based resins represented by polytetrafluoroethylene, polyvinyl fluoride, etc.

Here, "(meth)acrylic" means to include both "acrylic" and "methacrylic". In addition, (meta)acrylic acids include (meth)acrylic acid, (meth)acrylic acid ester, and (meth)acrylamide.

Further, the resin particles may or may not be cross-linked.

When the resin particles are resin particles made of a vinyl-based resin, the resin particles are obtained by addition polymerization of a monomer.

Examples of the monomer for obtaining a vinyl-based resin include: styrenes having a styrene skeleton, such as styrene, alkyl-substituted styrene (for example, α-methylstyrene, 2-methylstyrene, 3-methylstyrene, 4-methylstyrene, 2-ethylstyrene, 3-ethylstyrene, and 4-ethylstyrene), halogen-substituted styrene (for example, 2-chlorostyrene, 3-chlorostyrene, and 4-chlorostyrene), and vinyl naphthalene; (meta)acrylic acid esters such as methyl (meth)acrylate, ethyl (meth)acrylate, n-propyl (meth)acrylate, n-butyl (meth)acrylate, lauryl (meth)acrylate, 2-ethylhexyl (meth)acrylate; vinyl nitriles such as acrylonitrile and methacrylonitrile; vinyl ethers such as vinyl methyl ether and vinyl isobutyl ether; vinyl ketones such as vinyl methyl ketone, vinyl ethyl ketone, and vinyl isopropenyl ketone; acids such as (meth)acrylic acid, maleic acid, cinnamic acid, fumaric acid, and vinyl sulfonic acid; and bases such as ethyleneimine, vinylpyridine, and vinylamine.

The vinyl-based resin may be a resin obtained by using these monomers alone, or a resin which is a copolymer obtained by using two or more of these monomers.

As other monomers, a monofunctional monomer such as vinyl acetate, a bifunctional monomer such as divinylbenzene, ethylene glycol dimethacrylate, nonane diacrylate, and decanediol diacrylate, and a polyfunctional monomer such as trimethylolpropane triacrylate and trimethylolpropane trimethacrylate may be used in combination.

When a bifunctional monomer and a polyfunctional monomer are used in combination, cross-linked resin particles are obtained.

The resin particles are preferably resin particles made of polystyrenes, poly(meth)acrylic acids or polyesters, and more preferably resin particles made of polystyrenes, a styrene-(meth)acrylic acid copolymer or poly(meth)acrylic acids, from the viewpoints of manufacturability and adaptability of a particle removal step to be described later.

Here, the polystyrenes are resins having a structural unit derived from a styrene-based monomer (that is, a monomer having a styrene skeleton). More specifically, the polystyrenes contain the structural unit derived from the styrene-based monomer in a ratio of preferably 30 mol% or more, and more preferably 50 mol% or more, when the total amount of structural units constituting the resin is 100 mol%.

The poly(meth)acrylic acids mean methacrylic resins and acrylic resins, and are resins having a structural unit derived from a (meth)acrylic monomer (that is, a monomer having a (meth)acryloyl skeleton). More specifically, the poly(meth)acrylic acids contain, for example, structural units derived from (meth)acrylic acid and/or structural units derived from (meth)acrylic acid ester in a total ratio of preferably 30 mol% or more, and more preferably 50 mol% or more, when the total composition in the polymer is 100 mol%.

Further, polyesters are resins obtained by polycondensing a polycarboxylic acid and a polyhydric alcohol and having an ester bond in the main chain.

From the viewpoint of being easy to prevent the movement of particles due to a small difference in specific gravity with the liquid, the resin particles are preferably resin particles made of a resin having a structural unit derived from styrene, and contain the structural unit derived from styrene preferably in a ratio of 30 mol% or more, more preferably 50 mol% or more, still more preferably 80 mol% or more, and particularly preferably 100 mol%, when the total amount of the structural units constituting the resin is 100 mol%.

These resin particles may be used alone or in combination of two or more thereof.

The resin particles preferably maintain the particle shape during the process of producing the polyimide precursor solution according to the present exemplary embodiment, the coating of the polyimide precursor solution according to the present exemplary embodiment when producing the polyimide film, and the process of drying the coating film (before removing the resin particles). From these viewpoints, the glass transition temperature of the resin particles is preferably 60°C or higher, more preferably 70°C or higher, and still more preferably 80°C or higher.

The glass transition temperature is obtained from a DSC curve obtained by differential scanning calorimetry (DSC), and is more specifically obtained by the "extrapolated glass transition onset temperature" described in JIS K 7121:1987 "Method for measuring glass transition temperature of plastics", which is a method for obtaining the glass transition temperature.

(Inorganic Particles)

Specific examples of the inorganic particles include silica (silicon dioxide) particles, magnesium oxide particles, alumina particles, zirconia particles, calcium carbonate particles, calcium oxide particles, titanium dioxide particles, zinc oxide particles, and cerium oxide particles.

As described above, the shape of the particles is preferably spherical. From this viewpoint, the inorganic particles are preferably silica particles, magnesium oxide particles, calcium carbonate particles, titanium dioxide particles, and

alumina particles, more preferably silica particles, titanium dioxide particles, and alumina particles, and still more preferably silica particles.

These inorganic particles may be used alone or in combination of two or more thereof.

When the wettability and dispersibility of the inorganic particles in the solvent of the polyimide precursor solution according to the present exemplary embodiment are insufficient, the surface of the inorganic particles may be modified if necessary.

Examples of a surface modification method for the inorganic particles include a method of treating with an alkoxysilane having an organic group represented by a silane coupling agent, and a method of coating with organic acids such as oxalic acid, citric acid and lactic acid.

The content of the particles may be determined according to the application of the polyimide film, and is preferably 0.1 mass% or more and 20 mass% or less, more preferably 0.5 mass% or more and 20 mass% or less, and still more preferably 1 mass% or more and 20 mass% or less, with respect to the total mass of the polyimide precursor solution according to the present exemplary embodiment.

In the polyimide precursor solution according to the present exemplary embodiment, the content of the particles is preferably 10 vol% or more and 150 vol% or less, more preferably 20 vol% or more and 140 vol% or less, still more preferably 30 vol% or more and 130 vol% or less, and particularly preferably 30 vol% or more and 80 vol% or less, with respect to the solid content of the polyimide precursor solution.

When the content of the particles is within the above range, in the production of the porous polyimide film, the abundance ratio of the particles in the coating film obtained by coating the polyimide precursor solution increases, and the distance between the particles in the coating film tends to be short. Therefore, the porous polyimide film obtained by drying and firing the coating film tends to have a higher ratio of communication pores, thereby lowering the resistance value of the porous polyimide film.

(Aqueous Solvent)

The aqueous solvent contains an amine compound (A), an organic solvent (B) other than the amine compound (A), and water.

-Amine Compound (A)-

The amine compound (A) enhances the solubility of the polyimide precursor in water, and further has a catalytic action when the polyimide precursor is imidized (that is, dehydrated and ring-closed) to form a polyimide. Therefore, a dried film of the polyimide precursor and a polyimide film having high strength may be obtained.

Examples of the amine compound (A) include a primary amine compound, a secondary amine compound, and a tertiary amine compound.

Examples of the primary amine compound include methylamine, ethylamine, n-propylamine, isopropylamine, 2-ethanolamine, and 2-amino-2-methyl-1-propanol.

Examples of the secondary amine compound include dimethylamine, 2-(methylamino)ethanol, 2-(ethylamino)ethanol, and morpholine.

The amine compound (A) is preferably a tertiary amine compound.

Here, examples of the tertiary amine compound include an acyclic amine compound and a cyclic amine compound.

Examples of the acyclic amine compound include a trialkylamine (a tertiary amine compound having an alkyl group), and a tertiary aminoalcohol (a tertiary amine compound having an alkyl chain and a hydroxy group).

Examples of the cyclic amine compound include N-substituted piperazine (amine compound having a piperazine skeleton), N-substituted morpholine (amine compound having a morpholine skeleton), isoquinolins (amine compound having an isoquinolin skeleton), pyridines (amine compound having a pyridine skeleton), pyrimidines (amine compound having a pyrimidine skeleton), pyrazines (amine compound having a pyrazine skeleton), triazines (amine compound having a triazine skeleton), N-substituted imidazoles (amine compound having an imidazole skeleton), and polypyridine.

The number of the carbon atoms of the acyclic amine compound is not particularly limited, and is preferably 3 or more and 18 or less, more preferably 3 or more and 15 or less, and still more preferably 3 or more and 12 or less.

The number of the carbon atoms of the cyclic amine compound is not particularly limited, and is preferably 3 or more and 10 or less, more preferably 3 or more and 9 or less, and still more preferably 3 or more and 8 or less.

From the viewpoint of obtaining a dried film of a polyimide precursor and a polyimide film having high strength, the amine compound (A) is preferably at least one compound selected from the group consisting of a N-substituted morpholine, a trialkylamine, a tertiary aminoalcohol and a N-substituted imidazole.

The substituent of the N-substituted morpholine is preferably an alkyl group.

The number of the carbon atoms of the alkyl group is preferably 1 or more and 6 or less, more preferably 1 or

more and 5 or less, and still more preferably 1 or more and 4 or less.

Specific examples of the N-substituted morpholine include N-methylmorpholine, N-ethylmorpholine, N-propylmorpholine, and N-butylmorpholine.

The number of the carbon atoms of the alkyl group of the trialkylamine is preferably 1 or more and 6 or less, more preferably 1 or more and 5 or less, and still more preferably 1 or more and 4 or less.

Specific examples of the trialkylamine include triethylamine, trimethylamine, N,N-dimethylethylamine, N,N-dimethylpropylamine, N,N-dimethylbutylamine, N,N-diethylmethylamine, N,N-dipropylethylamine, and N,N-dimethylisopropylamine.

The number of the carbon atoms of the alcohol of the tertiary aminoalcohol is preferably 1 or more and 6 or less, more preferably 1 or more and 5 or less, and still more preferably 1 or more and 4 or less.

When the tertiary aminoalcohol has an alkyl group, the carbon atoms of the alkyl group is preferably 1 or more and 6 or less, more preferably 1 or more and 5 or less, and still more preferably 1 or more and 4 or less.

Specific examples of the tertiary aminoalcohol include N,N-dimethylethanolamine, N,N-dimethylpropanolamine, N,N-dimethylisopropanolamine, N,N-diethylethanolamine, N-ethyldiethanolamine, N-methyldiethanolamine, triethanolamine, and triisopropanolamine.

The substituent of the N-substituted imidazole is preferably an alkyl group.

The number of the carbon atoms of the alkyl group is preferably 1 or more and 6 or less, more preferably 1 or more and 5 or less, and still more preferably 1 or more and 4 or less.

Specific examples of the N-substituted imidazole include 1-methylimidazole, 1-ethylimidazole, and 1,2-dimethylimidazole.

The boiling point of the amine compound (A) is preferably 60°C or higher and 150°C or lower, more preferably 70°C or higher and 140°C or lower, and still more preferably 80°C or higher and 130°C or lower.

When the boiling point of the amine compound (A) is within the above range, the difference in boiling point between the amine compound (A) and the organic solvent (B) is appropriate, and the organic solvent (B) is more likely to be present in the dried film while imidization is in progress during the firing. Therefore, it is easier to maintain a state where the fluidity of the particles in the dried film is high. Therefore, a porous polyimide film having a high ratio of communication pores is easily obtained. Therefore, it is more likely to obtain a polyimide precursor solution from which a polyimide film having a low resistance value is obtained.

The amine compound (A) having a boiling point of 60°C or higher and 150°C or lower is preferably at least one selected from the group consisting of a N-substituted morpholine, a trialkylamine and a tertiary aminoalcohol.

When at least one selected from the group consisting of a N-substituted morpholine, a trialkylamine and a tertiary aminoalcohol is used as the amine compound (A) having a boiling point of 60°C or higher and 150°C or lower, it is easier to obtain a polyimide precursor solution from which a polyimide film having a low resistance value is obtained.

The reasons are presumed as follows.

By using the above compound as the amine compound (A), imidization can easily proceed and high strength can be easily obtained. In addition, when the boiling point of the amine compound (A) is 60°C or higher, imidization is likely to progress because the amine compound (A) is less likely to volatilize when coating the polyimide precursor solution. When the boiling point of the amine compound (A) is 150°C or lower, since the amine compound (A) is less likely to remain in the film after the drying step, the shortening of the curing reaction facilitates the movement of fine particles and facilitates the formation of communication pores. In addition, the odor derived from amines is less likely to remain on the film.

Specific examples of the N-substituted morpholine having a boiling point of 60°C or higher and 150°C or lower include N-methylmorpholine (116°C), N-ethylmorpholine (139°C), N-propylmorpholine (156°C), and N-butylmorpholine (78°C/22 mmHg).

Specific examples of the trialkylamine having a boiling point of 60°C or higher and 150°C or lower include triethylamine (90°C), N, N-dimethylpropylamine (66°C), N,N-dimethylbutylamine (93°C), N,N-diethylmethylamine (62°C), N,N-dipropylethylamine (127°C), and N,N-dimethylisopropylamine (68°C).

Examples of the tertiary aminoalcohol having a boiling point of 60°C or higher and 150°C or lower include N,N-dimethylethanolamine (134°C), and N,N-dimethylisopropanolamine (125°C).

The amine compound (A) is more preferably a N-substituted morpholine from the viewpoint of obtaining a dried film of a polyimide precursor and a polyimide film having high strength.

The above amine compound (A) may be used alone or in combination of two or more thereof.

From the viewpoint of obtaining a polyimide film having an increased ratio of communication pores in the obtained porous polyimide film and having a low resistance value, the ratio of the number of moles of the amine compound (A) to the number of moles of the tetracarboxylic dianhydride component in the polyimide precursor is preferably 0.5 times or more and 3.0 times or less, more preferably 0.6 times or more and 2.5 times or less, and still more preferably 0.7 times or more and 2.0 times or less.

The content of the amine compound (A) contained in the polyimide precursor solution according to the present

exemplary embodiment is preferably 1 mass% or more and 50 mass% or less, more preferably 2 mass% or more and 30 mass% or less, and still more preferably 3 mass% or more and 20 mass% or less, with respect to the total mass of the aqueous solvent contained in the polyimide precursor solution.

The number of moles of the amine compound (A) is the number of moles of the amine compound (A) contained in the polyimide precursor solution.

The number of moles of the tetracarboxylic dianhydride component of the polyimide precursor is the number of moles of the tetracarboxylic dianhydride which is used when producing the polyimide precursor.

-Organic Solvent (B)-

The organic solvent (B) is an organic solvent other than the amine compound (A).

The boiling point of the organic solvent (B) is higher than the boiling point of the amine compound (A).

The boiling point of the organic solvent (B) is 200°C or higher and 300°C or lower.

The organic solvent (B) is at least one selected from the group consisting of a ketone-based solvent, an ester-based solvent, and a hydrocarbon-based solvent.

Among the above solvents, the organic solvent (B) is more preferably at least one selected from the group consisting of a ketone-based solvent and an ester-based solvent.

When at least one selected from the group consisting of a ketone-based solvent, an ester-based solvent, and a hydrocarbon-based solvent is used as the organic solvent (B), it is likely to obtain a polyimide precursor solution from which a polyimide film having a low resistance value is obtained. The reasons are presumed as follows.

The above-mentioned type of solvent has a good affinity with particles, and when firing a dried film obtained by coating and drying a polyimide precursor solution, the dispersibility of the particles in the dried film tends to increase. Therefore, a porous polyimide film having a high ratio of communication pores is easily obtained. Therefore, it is more likely to obtain a polyimide precursor solution from which a polyimide film having a low resistance value is obtained.

The ketone-based solvent is an organic solvent having a ketone structure. Examples of the ketone-based solvent include a chain ketone, a cyclic ketone, and an aromatic ketone.

The cyclic ketone refers to a ketone having a carbonyl group as part of the cyclic structure.

The aromatic ketone refers to a ketone in which a carbonyl group is bonded to an aromatic ring.

The number of carbon atoms of the ketone-based solvent is preferably, for example, 5 or more and 20 or less, more preferably 7 or more and 18 or less, and still more preferably 9 or more and 16 or less.

Specific example of the chain ketone include decanone (200°C or higher and 215°C or lower), undecanone (220°C or higher and 230°C or lower), dodecanone (240°C or higher and 250°C or lower), tridecanone (260°C or higher and 270°C or lower), and tetradecanone (270°C or higher and 280°C or lower).

Specific example of the cyclic ketone include isophorone (215°C), cyclodecanone (106°C or higher and 107°C or lower (12 mmHg)), and cycloundecanone (106°C (4 mmHg)).

Specific examples of the aromatic ketone include acetophenone (202°C), propiophenone (216°C), and butyrophenone (221°C).

The ester-based solvent is an organic solvent having an ester group.

Examples of the ester-based solvent include a chain ester, a cyclic ester, and an aromatic ester.

The chain ester means a chain-shaped ester.

The cyclic ester means an ester having an ester group as a part of the cyclic structure.

The aromatic ester means an ester in which an ester group is bonded to an aromatic ring.

The number of carbon atoms of the ester-based solvent is preferably, for example, 5 or more and 20 or less, more preferably 7 or more and 18 or less, and still more preferably 9 or more and 16 or less.

Specific example of the chain ester include methyl nonanoate (214°C), methyl decanoate (229°C), methyl undecanoate (248°C), ethyl nonanoate (227°C), and ethyl decanoate (245°C).

Specific example of the cyclic ester include $\gamma$-butyrolactone (204°C), $\delta$-valerolactone (220°C), $\delta$-valerolactone (253°C), ethylene carbonate (260°C), and propylene carbonate (242°C).

Specific example of the aromatic ester include methyl benzoate (200°C), ethyl benzoate (212°C), propyl benzoate (230°C), and butyl benzoate (250°C).

Examples of the hydrocarbon-based solvent include an aliphatic hydrocarbon-based solvent and an aromatic hydrocarbon-based solvent.

The number of carbon atoms of the hydrocarbon-based solvent is preferably 10 or more and 20 or less, more preferably 11 or more and 18 or less, and still more preferably 12 or more and 16 or less.

Specific example of the aliphatic hydrocarbon-based solvent include dodecane (215°C), tridecane (234°C), tetradecane (254°C), pentadecane (269°C), and hexadecane (287°C).

Specific example of the aromatic hydrocarbon-based solvent include 1,2,3,4-tetrahydronaphthalene (207°C), 2,2'-dimethylbiphenyl (259°C), and 2-ethylnaphthalene (252°C).

The content of the organic solvent (B) with respect to the amine compound (A) is preferably 1 mass% or more and 30 mass% or less, more preferably 1 mass% or more and 15 mass% or less, still more preferably 2 mass% or more and 13 mass% or less, and particularly preferably 3 mass% or more and 10 mass% or less.
When the content the organic solvent (B) with respect to the amine compound (A) is within the above range, the organic solvent (B) tends to remain in the dried film to the extent that the dispersibility of the particles in the dried film is further increased when firing the dried film obtained by coating and drying the polyimide precursor solution. During firing, the dispersibility of the particles in the dried film tends to increase. Therefore, a porous polyimide film having a high ratio of communication pores is easily obtained. Therefore, it is more likely to obtain a polyimide precursor solution from which a polyimide film having a low resistance value is obtained.

-Water-

The aqueous solvent for use in the present exemplary embodiment contains water.
Examples of water include distilled water, ion-exchanged water, ultrafiltered water, and pure water.
The content of the water for use in the present exemplary embodiment is preferably 50 mass% or more and 99 mass% or less, more preferably 70 mass% or more and 97 mass% or less, and still more preferably 80 mass% or more and 96 mass% or less, with respect to the total mass of the aqueous solvent contained in the polyimide precursor solution.
The content of the aqueous solvent contained in the polyimide precursor solution according to the present exemplary embodiment is preferably 60 mass% or more and 99.9 mass% or less, and more preferably 75 mass% or more and 99 mass% or less, with respect to the total mass of the polyimide precursor solution.

-Other Solvents-

The aqueous solvent may contain other solvents other than the organic solvent (B) and water.
Examples of the other solvents include a water-soluble organic solvent and an aprotic polar solvent. The other solvents are preferably a water-soluble organic solvent from the viewpoint of transparency, mechanical strength and the like of a polyimide molded body. In particular, from the viewpoint of improving various properties of the polyimide molded body such as heat resistance, electrical properties, and solvent resistance, in addition to transparency and mechanical strength, the aqueous solvent may not contain an aprotic polar solvent, or may contain an aprotic polar solvent in a small amount (for example, 40 mass% or less, preferably 30 mass% or less) with respect to the total aqueous solvent. Here, the "water-soluble" means that the target substance dissolves in water in an amount of 1 mass% or more at 25°C.
Examples of the water-soluble organic solvent include a water-soluble ether-based solvent (that is, a water-soluble solvent having an ether bond in one molecule), a water-soluble ketone-based solvent (that is, a water-soluble solvent having a ketone group in one molecule), and a water-soluble alcohol-based solvent (that is, a water-soluble solvent having an alcoholic hydroxy group in one molecule).
The other solvents may be used alone or in combination of two or more thereof.
As the other solvents, those in which the particles do not dissolve are preferred.
The content of the other solvents is preferably 10 mass% or less, more preferably 5 mass% or less, and still more preferably 2 mass% or less, with respect to the entire polyimide precursor solution.

(Other Components)

The polyimide precursor solution according to the present exemplary embodiment may contain a catalyst for promoting an imidization reaction, a leveling material for improving the quality of film formation, and the like.
As the catalyst for promoting the imidization reaction, a dehydrating agent such as an acid anhydride, an acid catalyst such as a phenol derivative, a sulfonic acid derivative, or a benzoic acid derivative may be used.
In addition, the polyimide precursor solution may contain a conductive material (specifically, a conductive material (for example, having a volume resistivity of less than $10^7$ S2 ·cm) or a semi-conductive material (for example, having a volume resistivity of $10^7$ $\Omega$·cm or more and $10^{13}$ $\Omega$·cm or less)) as a conductive agent added for imparting conductivity, for example, depending on the intended use of the porous polyimide film.
Examples of the conductive agent include: carbon black (for example, acidic carbon black having a pH of 5.0 or less); metals (for example, aluminum or nickel); metal oxides (for example, yttrium oxide or tin oxide); and ionic conductive materials (for example, potassium titanate or LiCl). The conductive materials may be used alone or in combination of two or more thereof.
Further, the polyimide precursor solution may contain inorganic particles added for improving mechanical strength, depending on the intended use of the porous polyimide film. Examples of the inorganic particles include particulate materials such as silica powder, alumina powder, barium sulfate powder, titanium oxide powder, mica, and

talc. Further, $LiCoO_2$, $LiMn_2O$ and the like used as electrodes of a lithium ion battery may be contained.

(Difference in Boiling Point between Amine Compound (A) and Organic Solvent (B))

The difference between the boiling point of the amine compound (A) and the boiling point of the organic solvent (B), which is represented by the formula: [the boiling point of the organic solvent (B)] - [the boiling point of the amine compound (A)], is preferably 10°C or higher and 200°C or lower, more preferably 20°C or higher and 180°C or lower, still more preferably 30°C or higher and 160°C or lower, particularly preferably 40°C or higher and 140°C or lower, and most preferably 50°C or higher and 185°C or lower.

When the difference in boiling point between the amine compound (A) and the organic solvent (B) is within the above range, it is more likely to obtain a polyimide precursor solution from which a polyimide film having a low resistance value is obtained. The reasons are presumed as follows.

When the difference in boiling point between the amine compound (A) and the organic solvent (B) is within the above range, the volatility of the organic solvent (B) from the dried film is further reduced when firing the dried film obtained by coating and drying the polyimide precursor solution. Therefore, it is easier to maintain a state where the fluidity of the particles in the dried film during firing is high. Therefore, a porous polyimide film having a high ratio of communication pores is easily obtained. Therefore, it is more likely to obtain a polyimide precursor solution from which a polyimide film having a low resistance value is obtained.

From the viewpoint of setting the difference in boiling point between the amine compound (A) and the organic solvent (B) within the above range, the combination of the amine compound (A) and the organic solvent (B) is preferably as follows, for example.

· Amine compound (A): N-methylmorpholine, organic solvent (B): γ-butyrolactone
· Amine compound (A): N-methylmorpholine, organic solvent (B): ethylene carbonate
· Amine compound (A): triethylamine, organic solvent (B): ethylene carbonate
· Amine compound (A): 1,2-dimethylimidazole, organic solvent (B): ethylene carbonate
· Amine compound (A): N-methylmorpholine, organic solvent (B): acetophenone

<Method for Producing Porous Polyimide Film>

Hereinafter, an example of a method for producing the porous polyimide film according to the present exemplary embodiment will be described.

The method for producing the porous polyimide film according to the present exemplary embodiment includes: a step (P-1) of coating the polyimide precursor solution according to the present exemplary embodiment onto a substrate to form a coating film; a step (P-2) of drying the coating film to form a dried film; and a step (P-3) of firing the dried film and imidizing the polyimide precursor contained in the dried film to form a polyimide film, the step (P-3) including a treatment of removing the particles.

In the description of the production method, the same components are designated by the same reference numerals in FIGURE to be referred to. In reference numerals in FIGURE, 31 denotes a substrate, 51 denotes a release layer, 10A denotes a pore, and 10 denotes a porous polyimide film.

(Method for Producing Polyimide Precursor Solution)

The method for producing the polyimide precursor solution according to the present exemplary embodiment is not particularly limited, and examples thereof include the following production methods.

For one example, a method of obtaining the polyimide precursor solution by polymerizing a tetracarboxylic dianhydride and a diamine compound in a solution containing particles and an aqueous solvent containing an amine compound (A), an organic solvent (B) other than the amine compound (A), and water, and producing a polyimide precursor is mentioned.

According to this method, since an aqueous solvent is applied, the productivity is high and the polyimide precursor solution is produced in one stage and the steps may be simplified.

For another example, the following method is mentioned: a tetracarboxylic dianhydride and a diamine compound are polymerized in an organic solvent such as an aprotic polar solvent (for example, N-methyl-2-pyrrolidone (NMP)) to form a polyimide precursor, and then charging the polyimide precursor into water or an aqueous solvent such as alcohol to precipitate the polyimide precursor. Thereafter, the precipitated polyimide precursor is dissolved in a solution containing particles and an aqueous solvent containing an amine compound (A), an organic solvent (B) other than the amine compound (A), and water, to obtain a polyimide precursor solution.

(Step (P-1))

The step (P-1) is a step of coating the polyimide precursor solution onto a substrate to form a coating film.
First, the polyimide precursor solution according to the present exemplary embodiment is prepared.
Next, the polyimide precursor solution is coated onto a substrate to form a coating film.
The substrate on which the coating film containing the polyimide precursor and the particles is formed is not particularly limited. Examples thereof include a resin substrate made of polystyrene, polyethylene terephthalate or the like; a glass substrate; a ceramic substrate; a metallic substrate made of iron, stainless steel (SUS) or the like; and a composite material substrate made of a material combining the above materials. If necessary, the substrate may be provided with a release layer by performing a release treatment with, for example, a silicone or fluorine release agent.
The method of coating the polyimide precursor solution onto the substrate is not particularly limited. Examples thereof include various methods such as a spray coating method, a rotary coating method, a roll coating method, a bar coating method, a slit die coating method, and an inkjet coating method.

(Step (P-2))

The step (P-2) is a step of drying the coating film obtained in the step (P-1) to form a dried film.
Specifically, the dried film is formed by drying the coating film obtained in the step (P-1) by, for example, a method such as heat drying, natural drying, or vacuum drying. More specifically, the dried film is formed by drying the coating film such that the solvent remaining in the dried film is 50% or less (preferably 30% or less) with respect to the solid content of the dried film.

(Step (P-3))

The step (P-3) is a step of heating the dried film obtained in the step (P-2) and imidizing the polyimide precursor to form a polyimide film. The step (P-3) includes a treatment of removing particles. After the treatment for removing the particles, a porous polyimide film is obtained.
In the step (P-3), specifically, the dried film obtained in the step (P-2) is heated to progress imidization, and heating is further performed to form a polyimide film that has undergone imidization. As the imidization progresses and the imidization rate increases, the polyimide precursor is difficult to dissolve in an organic solvent.
Further, in the step (P-3), a treatment of removing particles is performed. The particles may be removed in the process of heating the film to imidize the polyimide precursor, or may be removed from the polyimide film after the imidization is completed.
In the present exemplary embodiment, the process of imidizing the polyimide precursor indicates a process in which the dried film obtained in the step (P-2) is heated to progress imidization, and in a state before the polyimide film is formed after the imidization is completed.
The treatment of removing particles is preferably carried out when the imidization rate of the polyimide precursor in the polyimide film is 10% or more in the process of imidizing the polyimide precursor in terms of particle removability and the like. When the imidization rate is 10% or more, it is easy to maintain the morphology.
Next, the treatment of removing particles will be described.
First, a treatment of removing resin particles will be described.
Examples of the treatment of removing resin particles include a method of removing the resin particles by heating, a method of removing the resin particles with an organic solvent that dissolves the resin particles, and a method of removing the resin particles by decomposition with a laser or the like. Among these, a method of removing the resin particles by heating and a method of removing the resin particles with an organic solvent that dissolves the resin particles are preferred.
As the method of removing the resin particles by heating, for example, in the process of imidizing the polyimide precursor, the resin particles may be removed by being decomposed by heating for progressing the imidization. In this case, there is no operation of removing the resin particles with a solvent and the number of steps may be reduced.
Examples of the method of removing the resin particles with an organic solvent that dissolves the resin particles include a method of dissolving and removing the resin particles by bringing the resin particles into contact with an organic solvent that dissolves the resin particles (for example, immersing the resin particles in the solvent). Immersion in the solvent in this state is preferred in that the dissolution efficiency of the resin particles is increased.
The organic solvent for dissolving the resin particles and for removing the resin particles is not particularly limited as long as it is an organic solvent that does not dissolve the polyimide film before imidization is completed and the polyimide film after imidization is completed but dissolves the resin particles. Examples thereof include: ethers such as tetrahydrofuran (THF); aromatic substances such as toluene; ketones such as acetone; and esters such as ethyl acetate.

When the resin particles are removed by dissolution and removal to form pores, a general-purpose solvent such as tetrahydrofuran, acetone, toluene, and ethyl acetate is preferred. Water may also be used, depending on the resin particles and the polyimide precursor used.

When the resin particles are removed by heating to form pores, the resin particles are not decomposed at the drying temperature after coating, but are thermally decomposed at a temperature at which the film of the polyimide precursor is imidized. From this viewpoint, the thermal decomposition start temperature of the resin particles is preferably 150°C or higher and 320°C or lower, more preferably 180°C or higher and 300°C or lower, and still more preferably 200°C or higher and 280°C or lower.

Here, a treatment of removing inorganic particles when the polyimide precursor solution contains inorganic particles will be described.

Examples of the treatment of removing inorganic particles include a method of removing the inorganic particles using a liquid that dissolves the inorganic particles but does not dissolve the polyimide precursor or the polyimide (hereinafter, may be referred to as "particle removing liquid"). The particle removing liquid is selected depending on the inorganic particles used. Examples thereof include: an aqueous solution of acids such as hydrofluoric acid, hydrochloric acid, hydrobromic acid, boric acid, perchloric acid, phosphoric acid, sulfuric acid, nitric acid, acetic acid, trifluoroacetic acid, and citric acid; and an aqueous solution of bases such as sodium hydroxide, potassium hydroxide, tetramethylammonium hydroxide, sodium carbonate, potassium carbonate, ammonia, and the above organic amines. Water alone may be used, depending on the inorganic particles and the polyimide precursor used.

In the step (P-3), the heating method for heating the dried film obtained in the step (P-2) to progress imidization to obtain a polyimide film is not particularly limited. For example, a method of heating in two stages may be mentioned. In the case of heating in two stages, specific heating conditions include the following.

The heating condition in the first stage is preferably a temperature at which the shape of the particles is maintained. Specifically, for example, the heating temperature is preferably in the range of 50°C or higher and 150°C or lower, and preferably in the range of 60°C or higher and 140°C or lower. The heating time is preferably in the range of 10 minutes or longer and 60 minutes or shorter. The higher the heating temperature, the shorter the heating time may be.

Examples of the heating conditions in the second stage include heating at 150°C or higher and 450°C or lower (preferably 200°C or higher and 430°C or lower) for 20 minutes or longer and 120 minutes or shorter. When the heating conditions are set within these ranges, the imidization reaction further progresses, and a polyimide film is obtained. During the heating reaction, the temperature is preferably gradually increased stepwise or at a constant rate before the final temperature of heating is reached.

The heating conditions are not limited to the above two-stage heating method, and for example, a one-stage heating method may be adopted. In the case of the one-stage heating method, for example, the imidization may be completed only under the heating conditions shown in the second stage above.

In the step (P-3), from the viewpoint of increasing the porosity, it is preferable to perform a treatment of exposing the particles to make the particles in an exposed state. In the step (P-3), the treatment of exposing the particles is preferably performed after the process of imidizing the polyimide precursor or after the imidization and before the treatment of removing particles.

In this case, for example, when forming a film on a substrate using a particle-dispersed polyimide precursor solution, the particle-dispersed polyimide precursor solution is coated onto the substrate to form a coating film in which particles are embedded. Next, the coating film is dried to form a film containing a polyimide precursor and particles. The film formed by this method is in a state where particles are embedded. This film may be subjected to the treatment of exposing the particles from the polyimide film in the process of imidizing the polyimide precursor before heating and removing the particles or after the imidization is completed.

In the step (P-3), the treatment of exposing the particles may be performed, for example, when the polyimide film is in the following state.

In a case where the treatment of exposing the particles is performed when the imidization ratio of the polyimide precursor in the polyimide film is less than 10% (that is, the polyimide precursor is dissoluble in a solvent), examples of the treatment of exposing the particles embedded in the polyimide film include a wiping treatment and an immersing treatment in a solvent. The solvent used at this time may be the same as or different from the solvent used for the particle-dispersed polyimide precursor solution of the present exemplary embodiment.

In a case where the treatment of exposing the particles is performed when the imidization rate of the polyimide precursor in the polyimide film is 10% or more (that is, it is difficult to dissolve the polyimide precursor in water or an organic solvent), and when the polyimide film is in a state where imidization is completed, examples include a method of mechanically cutting with tools such as sandpaper to expose the particles, and a method of decomposing the resin particles with a laser or the like to expose the resin particles when the particles are resin particles.

For example, in the case of mechanical cutting, a part of the particles present in the upper region (that is, the region on the side of the particles away from the substrate) of the particles embedded in the polyimide film is cut together with the polyimide film present on the upper part of the particles, and the cut particles are exposed from the surface of

the polyimide film.

Thereafter, the particles are removed from the polyimide film with exposed particles by the above treatment of removing the particles. Then, a porous polyimide film from which the particles have been removed is obtained (see FIGURE).

In the above, the process of producing the porous polyimide film which has been subjected to the treatment of exposing the particles in the step (P-3) has been described. However, in order to increase the porosity, the treatment of exposing the particles may be performed in the step (P-2). In this case, in the step (P-2), the particles may be exposed in the process of forming a film by drying to make the particles in an exposed state. By performing the treatment of exposing the particles, the porosity of the porous polyimide film is increased.

For example, in the process of obtaining a coating film containing a polyimide precursor solution and particles and then drying the coating film to form a film containing the polyimide precursor and the particles, as described above, the film is in a state where the polyimide precursor can be dissolved in a solvent. When the film is in this state, the particles may be exposed by, for example, a wiping treatment or an immersing treatment in a solvent. Specifically, when a treatment is performed to expose a particle layer by wiping, for example, with a solvent, the polyimide precursor solution present in a region equal to or larger than the thickness of the particle layer, the polyimide precursor solution present in the region equal to or larger than the thickness of the particle layer is removed. Then, the particles present in the upper region of the particle layer (that is, the region on the side of the particle layer away from the substrate) are exposed from the surface of the film.

In the step (P-3), the substrate for forming the above film used in the step (P-1) may be peeled off when the film becomes a dried film, when the polyimide precursor is difficult to dissolve in an organic solvent, or when the imidization is completed and the film is formed.

After the above steps, a porous polyimide film is obtained. Then, the porous polyimide film may be post-processed.

Here, the imidization ratio of the polyimide precursor will be described.

Examples of a partially imidized polyimide precursor include a precursor having a structure having a repeating unit represented by the following general formula (V-1), the following general formula (V-2), and the following general formula (V-3).

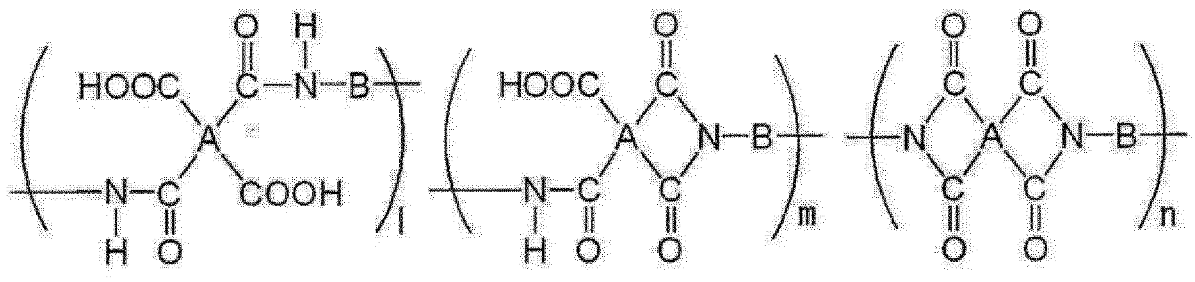

(V-1) (V-2) (V-3)

In the general formula (V-1), the general formula (V-2), and the general formula (V-3), A and B have the same meaning as A and B in the formula (I). l represents an integer of 1 or more, and m and n independently represent an integer of 0 or 1 or more.

The imidization ratio of the polyimide precursor represents the ratio of the number of imide-ring-closed bond parts (2n + m) to the total number of bonds (2l + 2m + 2n) in the bonding part of the polyimide precursor which is a reaction part of the tetracarboxylic dianhydride and the diamine compound. That is, the imidization ratio of the polyimide precursor is indicated by "(2n + m)/(2l + 2m + 2n)".

The imidization ratio of the polyimide precursor (value of "(2n + m)/(2l + 2m + 2n)") is measured by the following method.

- Measurement of Imidization Ratio of Polyimide Precursor-

· Preparation of polyimide precursor sample

(i) A polyimide precursor composition to be measured is coated onto a silicon wafer in a film thickness range of 1 μm or more and 10 μm or less to prepare a coating film sample.

(ii) The coating film sample is immersed in tetrahydrofuran (THF) for 20 minutes to replace the solvent in the

coating film sample with tetrahydrofuran (THF). The solvent for immersion is not limited to THF, and may be selected from a solvent that does not dissolve the polyimide precursor and may be miscible with the solvent component contained in the polyimide precursor composition. Specifically, alcohol solvents such as methanol and ethanol, and ether compounds such as dioxane may be used.

(iii) The coating film sample is taken out from the THF, and $N_2$ gas is sprayed onto the THF adhering to the surface of the coating film sample to remove the THF. A treatment is performed for 12 hours or longer in a range of 5°C or higher and 25°C or lower under a reduced pressure of 10 mmHg or less to dry the coating film sample, so as to prepare a polyimide precursor sample.

· Preparation of 100% imidized standard sample

(iv) In the same manner as in the (i) above, a polyimide precursor composition to be measured is coated onto a silicon wafer to prepare a coating film sample.

(v) The coating film sample is heated at 380°C for 60 minutes to carry out an imidization reaction to prepare a 100% imidized standard sample.

· Measurement and analysis

(vi) Infrared absorption spectra of the 100% imidized standard sample and the polyimide precursor sample are measured using a Fourier transform infrared spectrophotometer (FT-730, manufactured by HORIBA, Ltd.). The ratio I' (100) of the absorption peak (Ab'(1780 $cm^{-1}$)) derived from the imide bond near 1780 $cm^{-1}$ to the absorption peak (Ab'(1500 $cm^{-1}$)) derived from the aromatic ring near 1500 $cm^{-1}$ in the 100% imidized standard sample is determined.

(vii) Similarly, the polyimide precursor sample is measured, and the ratio I (x) of the absorption peak (1780 $cm^{-1}$) derived from the imide bond near 1780 $cm^{-1}$ to the absorption peak (1500 $cm^{-1}$) derived from the aromatic ring near 1500 $cm^{-1}$ is determined.

Then, using the measured absorption peaks I' (100) and I (x), the imidization ratio of the polyimide precursor is calculated based on the following equation.

· Equation:

$$\text{Imidization ratio of polyimide precursor} = I\,(x)/I'\,(100)$$

· Equation:

$$I'\,(100) = (Ab'(1780\ cm^{-1}))/(Ab'(1500\ cm^{-1}))$$

· Equation:

$$I\,(x) = (Ab(1780\ cm^{-1}))/(Ab(1500\ cm^{-1}))$$

The measurement of the imidization ratio of the polyimide precursor is applied to the measurement of the imidization ratio of an aromatic polyimide precursor. When measuring the imidization ratio of an aliphatic polyimide precursor, a peak derived from a structure that does not change before and after the imidization reaction is used as an internal standard peak instead of the absorption peak of the aromatic ring.

<Porous Polyimide Film>

Hereinafter, the porous polyimide film of the present exemplary embodiment will be described.

The porous polyimide film is preferably produced by a method for producing a porous polyimide film according to the present exemplary embodiment (that is, a method for producing a porous polyimide film, including the step (P-1), the step (P-2) and the step (P-3)).

In production by the method for producing a porous polyimide film according to the present exemplary embodiment, in the step (P-3), the particles in the dried film tend to maintain a high fluidity. Therefore, the ratio of communication

pores in the obtained porous polyimide film tends to increase. Therefore, it is easy to obtain a polyimide film having a low resistance value.

(Properties of Porous Polyimide Film)

-Porosity-

The porous polyimide film according to the present exemplary embodiment preferably has a porosity of 50% or more and 80% or less from the viewpoint of maintaining sufficient film strength. The lower limit of the porosity is more preferably 55% or more, and still more preferably 60% or more. The upper limit of the porosity is more preferably 75% or less, and still more preferably 70% or less.

For example, when the porous polyimide film according to the present exemplary embodiment is applied as a separator for a battery, the porosity is more preferably in the same range as the above from the viewpoint of excellent cycle properties.

The porosity of the porous polyimide film according to the present exemplary embodiment is a value obtained from the apparent density and the true density of the porous polyimide film. The apparent density is a value obtained by dividing the mass (g) of the porous polyimide film by the volume ($cm^3$) of the entire porous polyimide film including the pores. The true density $\rho$ is a value obtained by dividing the mass (g) of the porous polyimide film by the volume ($cm^3$) of the porous polyimide film excluding the pores. The porosity of the porous polyimide film is calculated according to the following equation.

$$\text{(Equation) Porosity (\%)} = \{1-(d/\rho)\}\times 100 = [1-\{(w/t)/\rho\}]\times 100$$

d: the apparent density ($g/cm^3$) of the porous polyimide film
$\rho$: the true density ($g/cm^3$) of the porous polyimide film
w: the weight per unit area ($g/m^2$) of the porous polyimide film
t: the thickness ($\mu m$) of the porous polyimide film

-Pore-

The shape of the pores is preferably spherical or close to spherical. Further, it is preferable that the pores have a continuous shape in which the pores are connected to each other. The pore diameter of the part where the pores are connected to each other is, for example, preferably 1/100 or more and 1/2 or less, more preferably 1/50 or more and 1/3 or less, and still more preferably 1/20 or more and 1/4 or less of the maximum pore diameter. Specifically, the average value of the pore diameter of the part where the pores are connected to each other is preferably 5 nm or more and 1500 nm or less.

The average value of the pore diameter is not particularly limited, and is preferably in the range of 10 nm or more and 2,500 nm or less, more preferably in the range of 50 nm or more and 2,000 nm or less, still more preferably in the range of 100 nm or more and 1,500 nm or less, and particularly preferably in the range of 150 nm or more and 1,000 nm or less.

The porous polyimide film of the present exemplary embodiment has a ratio of the maximum diameter to the minimum diameter of the pores, that is, a ratio of the maximum value to the minimum value of the pore diameter, of preferably 1 or more and 2 or less, more preferably 1 or more and 1.9 or less, and still more preferably 1 or more and 1.8 or less. Among this range, the ratio is more preferably close to 1. Within this range, a variation in pore diameter is prevented. Further, when the porous polyimide film of the present exemplary embodiment is applied to, for example, a battery separator of a lithium ion battery, the occurrence of turbulence in the ion flow is prevented, so that the formation of lithium dendrites is easily prevented. The "ratio of the maximum diameter to the minimum diameter of the pores" is a ratio represented by a value obtained by dividing the maximum diameter of the pore by the minimum diameter of the pore (that is, the maximum value/the minimum value of the pore diameter).

The average value of the pore diameter and the average value of the pore diameter of the part where the pores are connected to each other are values observed and measured by a scanning electron microscope (SEM). Specifically, first, a porous polyimide film is cut out and a measurement sample is prepared. Then, the measurement sample is observed and measured by VE SEM manufactured by KEYENCE CORPORATION using image processing software included in the VE SEM as standard. The observation and measurement are performed on 100 pore parts in the cross section of the measurement sample, and the average value, the minimum diameter, the maximum diameter, and the arithmetic average diameter are obtained. When the shape of the pore is not circular, the longest part is the diameter.

-Film Thickness-

The film thickness of the porous polyimide film according to the present exemplary embodiment is not particularly limited and is selected according to the intended use, and may be, for example, 10 μm or more and 1,000 μm or less. The film thickness may be preferably 20 μm or more, and more preferably 30 μm or more. Further, the film thickness may be preferably 500 μm or less, and more preferably 400 μm or less.

-Air Permeation Rate-

From the viewpoint of substance permeability, the porous polyimide film according to the present exemplary embodiment preferably has an air permeation rate of 40 seconds or less, more preferably 35 seconds or less, and still more preferably 20 seconds or less. The lower limit of the air permeation rate may be 5 seconds or more.

When the air permeation rate of the porous polyimide film is within the above range, it is easy to obtain a polyimide film having a higher ratio of communication pores. Therefore, it is easy to obtain a polyimide film having a lower resistance.

For example, when the porous polyimide film according to the present exemplary embodiment is applied as a separator for a battery, by setting the air permeation rate within the above rang, a decrease in cycle properties is prevented. The smaller the air permeation rate, the better the cycle properties. Therefore, a value of the permeation rate closer to 0 is preferred.

The method for measuring the air permeation rate of the porous polyimide film according to the present exemplary embodiment will be described in Examples described later.

(Use of Porous Polyimide Film)

Examples of the use of the porous polyimide film according to the present exemplary embodiment include: battery separators for lithium batteries, etc.; separators for electrolytic capacitors; electrolyte membranes for fuel cells, etc.; battery electrode materials; gas or liquid separation membranes; and low dielectric constant materials.

When the porous polyimide film according to the present exemplary embodiment is applied to a battery separator, for example, it is considered that the formation of lithium dendrites is prevented by the action of preventing the variation in ion flow distribution of lithium ions. It is presumed that this is because the shape of the pores and the variation in pore diameter of the porous polyimide film of the present exemplary embodiment are prevented.

Further, for example, when the porous polyimide film according to the present exemplary embodiment is applied to a battery electrode material, it is considered that the capacity of the battery increases because the chance of contact with the electrolytic solution increases. It is presumed that this is because the amount of the material such as carbon black for electrodes contained in the porous polyimide film exposed on the surface of the pores of the porous polyimide film and the surface of the porous polyimide film increases.

Further, for example, it is also possible to fill the pores of the porous polyimide film with, for example, an ionic gel obtained by gelling a so-called ionic liquid and to apply the obtained product as an electrolyte membrane. Since the process is simplified by the production method of the present exemplary embodiment, it is considered that a lower cost electrolyte membrane may be obtained.

Examples

Examples will be described below, but the present invention is not limited to these Examples. In the following description, all "parts" and "%" are based on mass unless otherwise specified.

<Preparation of Resin Particle Dispersion Liquid>

(Preparation of Resin Particle Dispersion Liquid)

770 parts by mass of styrene, 230 parts by mass of butyl acrylate, 15.7 parts by mass of dodecane thiol, 19.8 parts by mass of a surfactant Dowfax2A1 (a 47% solution, manufactured by Dow Chemical Company), and 576 parts by mass of ion-exchanged water are mixed, and the mixture is stirred and emulsified at 1,500 rpm for 30 minutes with a dissolver to prepare a monomeric emulsion liquid. Subsequently, 1.49 parts by mass of Dowfax2A1 (a 47% solution, manufactured by Dow Chemical Company) and 1270 parts by mass of ion-exchanged water are charged into the reaction vessel. After heating to 75°C under a nitrogen stream, 75 parts by mass of the monomeric emulsion liquid is added, and then, a polymerization initiator solution in which 15 parts by mass of ammonium persulfate is dissolved in 98 parts by mass of ion-exchanged water is added dropwise over 10 minutes. After the reaction is carried out for 50 minutes after

the dropping, the remaining monomeric emulsion liquid is added dropwise over 220 minutes, and reacted for another 180 minutes. A resin particle dispersion liquid is obtained as a styrene-acrylic resin particle dispersion liquid whose solid content concentration is adjusted to 20 mass% after cooling. The average particle diameter of the resin particles is 0.3 μm.

<Example 1>

(Preparation of Polyimide Precursor Solution (1))

To 780 parts of ion-exchanged water, 18.81 parts of p-phenylenediamine (hereinafter, also referred to as "PDA"), 51.19 parts of 3,3',4,4'-biphenyltetracarboxylic dianhydride (hereinafter, also referred to as "BPDA"), 5.2 parts of γ-butyrolactone as the organic solvent (B), and 350 parts (20 mass% with respect to the amine compound (A)) of the resin particle dispersion liquid are added under a nitrogen stream with heating at 50°C and stirring. Next, a mixture of 26.40 parts of N-methylmorpholine (hereafter, also referred to as "MMO") as the amine compound (A) and 98.52 parts of ion-exchanged water is added under a nitrogen stream at 50°C over 120 minutes with stirring. After 15 hours at 50°C, a polyimide precursor solution having a solid content concentration of 12.7% is obtained.

(Preparation of Porous Polyimide Film)

-Porous Polyimide Film-

The polyimide precursor solution is coated onto a glass substrate to have a film thickness after drying of about 30 μm, drying is performed at 90°C for 1 hour, the temperature is raised from 90°C to 380°C at a rate of 10°C/min, held at 380°C for 1 hour, and then cooled to room temperature (25°C, the same applies hereinafter) to obtain a porous polyimide film.

<Examples 2 to 29 and Comparative Examples 1 to 5>

A polyimide precursor solution having a solid content concentration of 7% and a porous polyimide film are obtained in the same manner as in Example 1, except that the types of the amine compound (A) and the organic solvent (B), the contents of the amine compound (A) and the organic solvent (B), and the content of particles are changed to those shown in Table 1.

The content of particles is adjusted by changing the amount of the resin particle dispersion liquid added.

<Evaluation>

The porous polyimide film obtained in each Example is evaluated for film thickness, porosity, air permeation rate, and cycle properties.

(Air Permeation Rate)

The prepared porous polyimide film is cut into 1 $cm^2$ squares, and a measurement sample for the air permeation rate is sampled. The sample is sandwiched and set between a funnel and a base portion of a filter holder for vacuum filtration (KGS-04 manufactured by ADVANTEC). Then, the filter holder sandwiching the sample is turned upside down and immersed in water to fill the filter holder with water to a predetermined position in the funnel. An air pressure of 0.5 atm (0.05 MPas) is applied from a side of the base portion where the funnel is not in contact with the base portion, and the time (seconds) through which 50 ml of air passes is measured and evaluated as the air permeation rate.

(Cycle Properties)

Using the porous polyimide film obtained in each Example, a lithium ion battery is prepared, and the reduction rate of the battery capacity when repeatedly performing charging and discharging 500 times (1C charge and 1C discharge at 25°C) is investigated. The smaller the reduction rate, the better the cycle properties. The evaluation is made according to the following criteria. The results are shown in Table 2.

Good: the reduction rate is less than 15%
Poor: the reduction rate is 15% or more

The abbreviations in Table 1 are shown below.

•"Content (mass% with respect to aqueous solvent)": the content of the amine compound (A), the organic solvent (B), or water with respect to the total mass of the aqueous solvent contained in the polyimide precursor solution
·"(B)/(A)×100%": the content (unit: mass%) of the organic solvent (B) with respect to the amine compound (A)
·"Content of particles": the content (unit: vol%) of particles with respect to the solid content of the polyimide precursor solution

[Table 1]

| | Composition | | | | | | | | | | | |
|---|---|---|---|---|---|---|---|---|---|---|---|---|
| | Amine compound (A) | | | | Organic solvent (B) | | | | Difference in boiling point (°C) | (B)/(A) × 100% | Water | Content of particles |
| | Name | Category | Boiling point (°C) | Content (mass% with respect to aqueous solvent) | Name | Category | Boiling point (°C) | Content (mass% with respect to aqueous solvent) | (B) - (A) | mass% | Content (mass% with respect to aqueous solvent) | vol% |
| Example 1 | N-methylmorpholine | N-substituted morpholine | 116 | 6.4 | γ-butyrolactone | Ester-based solvent | 204 | 1.3 | 88 | 20 | 92 | 60 |
| Example 2 | N-methylmorpholine | N-substituted morpholine | 116 | 6.4 | Ethylene carbonate | Ester-based solvent | 260 | 1.3 | 144 | 20 | 92 | 60 |
| Example 3 | Triethylamine | Trialkylamine | 89 | 6.4 | Ethylene carbonate | Ester-based solvent | 260 | 1.3 | 171 | 20 | 92 | 60 |
| Example 4 | 1,2-dimethylimidazole | N-substituted imidazole | 204 | 6.4 | Ethylene carbonate | Ester-based solvent | 260 | 1.3 | 56 | 20 | 92 | 60 |
| Example 5 | N-methylmorpholine | N-substituted morpholine | 116 | 6.4 | Acetophenone | Ketone-based solvent | 202 | 1.3 | 86 | 20 | 92 | 60 |
| Comparative Example 1 | N-methylmorpholine | N-substituted morpholine | 116 | 6.4 | - | - | - | 0 | - | 0 | 93.3 | 60 |
| Comparative Example 2 | 1,2-dimethylimidazole | N-substituted imidazole | 204 | 6.4 | γ-butyrolactone | Ester-based solvent | 204 | 1.3 | 0 | 20 | 92 | 60 |
| Comparative Example 3 | 1,3-dimethyl-2-imidazolidinone | Others | 225 | 6.4 | γ-butyrolactone | Ester-based solvent | 204 | 1.3 | -21 | 20 | 92 | 60 |
| Comparative Example 4 | N-methylmorpholine | N-substituted morpholine | 116 | 6.4 | Heptyl acetate | Ester-based solvent | 192 | 1.3 | 76 | 20 | 92 | 60 |
| Example 6 | N-methylmorpholine | N-substituted morpholine | 116 | 6.4 | Pentyl cinnamate | Ester-based solvent | 299 | 1.3 | 183 | 20 | 92 | 60 |
| Comparative Example 5 | N-methylmorpholine | N-substituted morpholine | 116 | 6.4 | Tributyrin | Ester-based solvent | 305 | 1.3 | 189 | 20 | 92 | 60 |

(continued)

| | Composition | | | | | | | | | | | |
|---|---|---|---|---|---|---|---|---|---|---|---|---|
| | Amine compound (A) | | | | Organic solvent (B) | | | | Difference in boiling point (°C) | (B)/(A) × 100% | Water | Content of particles |
| | Name | Category | Boiling point (°C) | Content (mass% with respect to aqueous solvent) | Name | Category | Boiling point (°C) | Content (mass% with respect to aqueous solvent) | (B) - (A) | mass% | Content (mass% with respect to aqueous solvent) | vol% |
| Example 7 | 1,2-dimethylimidazole | N-substituted imidazole | 204 | 6.4 | γ-valerolactone | Ester-based solvent | 207 | 1.3 | 3 | 20 | 92 | 60 |
| Example 8 | 1,3-dimethylimidazole | N-substituted imidazole | 204 | 6.4 | γ-hexanolactone | Ester-based solvent | 219 | 1.3 | 15 | 20 | 92 | 60 |
| Example 9 | N-methylmorpholine | N-substituted morpholine | 89 | 6.4 | γ-decanolactone | Ester-based solvent | 281 | 1.3 | 192 | 20 | 92 | 60 |
| Example 10 | Triethylamine | Trialkylamine | 89 | 6.4 | Pentyl cinnamate | Ester-based solvent | 299 | 1.3 | 210 | 20 | 92 | 60 |
| Example 11 | Tributhylamine | Trialkylamine | 216 | 6.4 | Ethylene carbonate | Ester-based solvent | 260 | 1.3 | 44 | 20 | 92 | 60 |
| Example 12 | N,N-dimethylhexane-1 -amine | Trialkylamine | 150 | 6.4 | γ-butyrolactone | Ester-based solvent | 204 | 1.3 | 54 | 20 | 92 | 60 |

(continued)

| | Amine compound (A) | | | | Organic solvent (B) | | | | Difference in boiling point (°C) | (B)/(A) ×100% | Water | Content of particles |
|---|---|---|---|---|---|---|---|---|---|---|---|---|
| Name | Category | Boiling point (°C) | Content (mass% with respect to aqueous solvent) | Name | Category | Boiling point (°C) | Content (mass% with respect to aqueous solvent) | (B) - (A) | mass% | Content (mass% with respect to aqueous solvent) | vol% | |
| Example 13 | N-methylmorpholine | N-substituted morpholine | 116 | 6.4 | Pentyl cinnamate | Ester-based solvent | 299 | 1.3 | 183 | 20 | 92 | 60 |
| Example 14 | N-methyl diallylamine | Trialkylamine | 111 | 7.4 | Pentyl cinnamate | Ester-based solvent | 299 | 1.3 | 188 | 20 | 92 | 60 |
| Example 15 | N-methylmorpholine | N-substituted morpholine | 116 | 6.4 | Naphthalene | Hydrocarbon-ba sed solvent | 218 | 1.3 | 102 | 20 | 92 | 60 |
| Example 16 | N,N-dimethylethylami ne | Trialkylamine | 38 | 6.4 | γ-butyrolactone | Ester-based solvent | 204 | 1.3 | 166 | 20 | 92 | 60 |
| Example 17 | N,N-diethylmethylami ne | Trialkylamine | 63 | 6.4 | γ-butyrolactone | Ester-based solvent | 204 | 1.3 | 37 | 20 | 92 | 60 |
| Example 18 | N,N-dimethylhexane-1 -amine | Trialkylamine | 150 | 6.4 | γ-butyrolactone | Ester-based solvent | 204 | 1.3 | 54 | 20 | 92 | 60 |
| Example 19 | Tripropylamine | Trialkylamine | 155 | 7.4 | γ-butyrolactone | Ester-based solvent | 204 | 1.3 | 49 | 20 | 92 | 60 |
| Example 20 | 2-(dimethylamino)etha nol | Tertiary aminoalcohol | 135 | 6.4 | γ-butyrolactone | Ester-based solvent | 204 | 1.3 | 69 | 20 | 92 | 60 |
| Example 21 | N,N,N',N'-tetramethyl ethylenediamine | Trialkylamine | 122 | 7.4 | γ-butyrolactone | Ester-based solvent | 204 | 1.3 | 82 | 20 | 92 | 60 |
| Example 22 | N-methylmorpholine | N-substituted morpholine | 116 | 6.4 | γ-butyrolactone | Ester-based solvent | 204 | 1.3 | 88 | 20 | 92 | 25 |
| Example 23 | N-methylmorpholine | N-substituted morpholine | 116 | 6.4 | γ-butyrolactone | Ester-based solvent | 204 | 1.3 | 88 | 20 | 92 | 30 |

(continued)

| | Amine compound (A) | | | | Organic solvent (B) | | | | Difference in boiling point (°C) | (B)/(A) ×100% | Water | Content of particles |
|---|---|---|---|---|---|---|---|---|---|---|---|---|
| Name | Category | Boiling point (°C) | Content (mass% with respect to aqueous solvent) | Name | Category | Boiling point (°C) | Content (mass% with respect to aqueous solvent) | (B) - (A) | mass% | Content (mass% with respect to aqueous solvent) | vol% | |
| Example 24 | N-methylmorpholine | N-substituted morpholine | 116 | 6.4 | γ-butyrolactone | Ester-based solvent | 204 | 1.3 | 88 | 20 | 92 | 80 |
| Example 25 | N-methylmorpholine | N-substituted morpholine | 116 | 6.4 | γ-butyrolactone | Ester-based solvent | 204 | 1.3 | 88 | 20 | 92 | 85 |
| Example 26 | N-methylmorpholine | N-substituted morpholine | 116 | 6.4 | γ-butyrolactone | Ester-based solvent | 205 | 0.03 | 88 | 0.5 | 93 | 60 |
| Example 27 | N-methylmorpholine | N-substituted morpholine | 116 | 6.4 | γ-butyrolactone | Ester-based solvent | 206 | 0.05 | 88 | 2 | 93 | 60 |
| Example 28 | N-methylmorpholine | N-substituted morpholine | 116 | 6.4 | γ-butyrolactone | Ester-based solvent | 206 | 2 | 88 | 30 | 90 | 60 |
| Example 29 | N-methylmorpholine | N-substituted morpholine | 116 | 6.4 | γ-butyrolactone | Ester-based solvent | 206 | 23 | 88 | 35 | 90 | 60 |

[Table 2]

| | Evaluation | | | |
|---|---|---|---|---|
| | Film thickness | Porosity | Air permeation rate | Cycle properties |
| | μm | % | Second | - |
| Example 1 | 15 | 60 | 35 | Good |
| Example 2 | 15 | 59 | 25 | Good |
| Example 3 | 15 | 64 | 15 | Good |
| Example 4 | 15 | 61 | 50 | Good |
| Example 5 | 15 | 60 | 38 | Good |
| Comparative Example 1 | 15 | 63 | 100 | Poor |
| Comparative Example 2 | 15 | 65 | 80 | Poor |
| Comparative Example 3 | 15 | 58 | 110 | Poor |
| Comparative Example 4 | 15 | 59 | 65 | Poor |
| Example 6 | 15 | 60 | 10 | Good |
| Comparative Example 5 | 15 | 59 | 60 | Poor |
| Example 7 | 15 | 60 | 50 | Good |
| Example 8 | 15 | 60 | 50 | Good |
| Example 9 | 15 | 60 | 15 | Good |
| Example 10 | 15 | 60 | 45 | Good |
| Example 11 | 15 | 60 | 55 | Good |
| Example 12 | 15 | 60 | 45 | Good |
| Example 13 | 15 | 60 | 10 | Good |
| Example 14 | 15 | 60 | 25 | Good |
| Example 15 | 15 | 58 | 50 | Good |
| Example 16 | 15 | 59 | 45 | Good |
| Example 17 | 15 | 60 | 50 | Good |
| Example 18 | 15 | 60 | 45 | Good |
| Example 19 | 15 | 60 | 40 | Good |
| Example 20 | 15 | 60 | 49 | Good |
| Example 21 | 15 | 59 | 50 | Good |
| Example 22 | 15 | 25 | 40 | Good |
| Example 23 | 15 | 30 | 50 | Good |
| Example 24 | 15 | 80 | 5 | Good |
| Example 25 | 15 | 85 | 50 | Good |
| Example 26 | 15 | 60 | 40 | Good |
| Example 27 | 15 | 60 | 50 | Good |
| Example 28 | 15 | 60 | 21 | Good |
| Example 29 | 15 | 60 | 20 | Good |

From the above results, it can be seen that the porous polyimide film obtained from the polyimide precursor

solution of the present Example is a porous polyimide film having a high ratio of communication pores and having low resistance, as compared with the porous polyimide film obtained from the polyimide precursor solution of Comparative Example.

Therefore, it can be seen that the polyimide precursor solution of the present Example can obtain a porous polyimide film having a lower resistance value than that of Comparative Example.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments are chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

## Claims

**1.** A polyimide precursor solution, comprising:

a polyimide precursor;
particles; and
an aqueous solvent containing an amine compound (A), an organic solvent (B) other than the amine compound (A) and water, wherein
the boiling point of the organic solvent (B) is higher than a boiling point of the amine compound (A), and the boiling point of the organic solvent (B) is 200°C or higher and 300°C or lower, and wherein
the organic solvent (B) is at least one selected from the group consisting of a ketone-based solvent, an ester-based solvent, and a hydrocarbon-based solvent.

**2.** The polyimide precursor solution according to claim 1, wherein the difference between the boiling point of the amine compound (A) and the boiling point of the organic solvent (B), which is represented by the formula: [the boiling point of the organic solvent (B)] - [the boiling point of the amine compound (A)], is 10°C or higher and 200°C or lower.

**3.** The polyimide precursor solution according to claim 2, wherein the difference between the boiling point of the amine compound (A) and the boiling point of the organic solvent (B), which is represented by the formula: [the boiling point of the organic solvent (B)] - [the boiling point of the amine compound (A)], is 50°C or higher and 185°C or lower.

**4.** The polyimide precursor solution according to any one of claims 1 to 3, wherein the organic solvent (B) is at least one selected from the group consisting of a ketone-based solvent and an ester-based solvent.

**5.** The polyimide precursor solution according to any one of claims 1 to 4, wherein the boiling point of the amine compound (A) is 60°C or higher and 150°C or lower.

**6.** The polyimide precursor solution according to claim 5, wherein the amine compound (A) is at least one selected from the group consisting of a N-substituted morpholine, a trialkylamine and a tertiary aminoalcohol.

**7.** The polyimide precursor solution according to any one of claims 1 to 6, wherein the content of the particles is 30 vol% or more and 80 vol% or less with respect to the solid content of the polyimide precursor solution.

**8.** The polyimide precursor solution according to any one of claims 1 to 7, wherein the content of the organic solvent (B) with respect to the amine compound (A) is 1 mass% or more and 30 mass% or less.

**9.** A method for producing a porous polyimide film, comprising:

coating the polyimide precursor solution according to any one of claims 1 to 8 onto a substrate to form a coating film;
drying the coating film to form a dried film; and
firing the dried film to imidize the polyimide precursor contained in the dried film to form a polyimide film, and removing the particles.

**Patentansprüche**

1. Polyimidvorläuferlösung, umfassend:

    einen Polyimidvorläufer;
    Partikel; und
    ein wässriges Lösungsmittel, das eine Aminverbindung (A), ein organisches Lösungsmittel (B), das von der Aminverbindung (A) verschieden ist, und Wasser enthält, wobei
    der Siedepunkt des organischen Lösungsmittels (B) höher als ein Siedepunkt der Aminverbindung (A) ist und der Siedepunkt des organischen Lösungsmittels (B) 200 °C oder mehr und 300 °C oder weniger beträgt und wobei
    das organische Lösungsmittel (B) mindestens eines ist, das aus der Gruppe bestehend aus einem Lösungsmittel auf Ketonbasis, einem Lösungsmittel auf Esterbasis und einem Lösungsmittel auf Kohlenwasserstoffbasis ausgewählt ist.

2. Polyimidvorläuferlösung nach Anspruch 1, wobei die Differenz zwischen dem Siedepunkt der Aminverbindung (A) und dem Siedepunkt des organischen Lösungsmittels (B), dargestellt durch die Formel: [der Siedepunkt des organischen Lösungsmittels (B)] - [der Siedepunkt der Aminverbindung (A)], 10 °C oder mehr und 200 °C oder weniger beträgt.

3. Polyimidvorläuferlösung nach Anspruch 2, wobei die Differenz zwischen dem Siedepunkt der Aminverbindung (A) und dem Siedepunkt des organischen Lösungsmittels (B), dargestellt durch die Formel: [der Siedepunkt des organischen Lösungsmittels (B)] - [der Siedepunkt der Aminverbindung (A)], 50 °C oder mehr und 185 °C oder weniger beträgt.

4. Polyimidvorläuferlösung nach einem der Ansprüche 1 bis 3, wobei das organische Lösungsmittel (B) mindestens eines ist, das aus der Gruppe bestehend aus einem Lösungsmittel auf Ketonbasis und einem Lösungsmittel auf Esterbasis ausgewählt ist.

5. Polyimidvorläuferlösung nach einem der Ansprüche 1 bis 4, wobei der Siedepunkt der Aminverbindung (A) 60 °C oder mehr und 150 °C oder weniger beträgt.

6. Polyimidvorläuferlösung nach Anspruch 5, wobei die Aminverbindung (A) mindestens eine ist, die aus der Gruppe bestehend aus einem N-substituierten Morpholin, einem Trialkylamin und einem tertiären Aminoalkohol ausgewählt ist.

7. Polyimidvorläuferlösung nach einem der Ansprüche 1 bis 6, wobei der Partikelgehalt 30 Vol.-% oder mehr und 80 Vol.-% oder weniger, bezogen auf den Feststoffgehalt der Polyimidvorläuferlösung, beträgt.

8. Polyimidvorläuferlösung nach einem der Ansprüche 1 bis 7, wobei der Gehalt des organischen Lösungsmittels (B), bezogen auf die Aminverbindung (A), 1 Massen-% oder mehr und 30 Massen-% oder weniger beträgt.

9. Verfahren zum Herstellen eines porösen Polyimidfilms, umfassend:

    Auftragen der Polyimidvorläuferlösung nach einem der Ansprüche 1 bis 8 auf ein Substrat, um einen Beschichtungsfilm zu bilden;
    Trocknen des Beschichtungsfilms, um einen getrockneten Film zu bilden; und
    Brennen des getrockneten Films, um den in dem getrockneten Film enthaltenen Polyimidvorläufer zu imidisieren, um einen Polyimidfilm zu bilden, und Entfernen der Partikel.

**Revendications**

1. Solution de précurseur de polyimide, comprenant :

    un précurseur de polyimide ;
    des particules ; et
    un solvant aqueux contenant un composé amine (A), un solvant organique (B) autre que le composé amine

(A) et de l'eau, dans laquelle
le point d'ébullition du solvant organique (B) est supérieur à un point d'ébullition du composé amine (A), et le point d'ébullition du solvant organique (B) est de 200 °C ou plus et de 300 °C ou moins, et dans laquelle
le solvant organique (B) est au moins un solvant choisi dans le groupe constitué d'un solvant à base de cétone, d'un solvant à base d'ester et d'un solvant à base d'hydrocarbure.

**2.** Solution de précurseur de polyimide selon la revendication 1, dans laquelle la différence entre le point d'ébullition du composé amine (A) et le point d'ébullition du solvant organique (B), qui est représentée par la formule : [le point d'ébullition du solvant organique (B)] - [le point d'ébullition du composé amine (A)], est de 10 °C ou plus et de 200 °C ou moins.

**3.** Solution de précurseur de polyimide selon la revendication 2, dans laquelle la différence entre le point d'ébullition du composé amine (A) et le point d'ébullition du solvant organique (B), qui est représentée par la formule : [le point d'ébullition du solvant organique (B)] - [le point d'ébullition du composé amine (A)], est de 50 °C ou plus et de 185 °C ou moins.

**4.** Solution de précurseur de polyimide selon l'une quelconque des revendications 1 à 3, dans laquelle le solvant organique (B) est au moins un solvant choisi dans le groupe constitué d'un solvant à base de cétone et d'un solvant à base d'ester.

**5.** Solution de précurseur de polyimide selon l'une quelconque des revendications 1 à 4, dans laquelle le point d'ébullition du composé amine (A) est de 60 °C ou plus et de 150 °C ou moins.

**6.** Solution de précurseur de polyimide selon la revendication 5, dans laquelle le composé amine (A) est au moins un composé choisi dans le groupe constitué d'une morpholine N-substituée, d'une trialkylamine et d'un aminoalcool tertiaire.

**7.** Solution de précurseur de polyimide selon l'une quelconque des revendications 1 à 6, dans laquelle la teneur en particules est de 30 % en volume ou plus et de 80 % en volume ou moins par rapport à la teneur en matières solides de la solution de précurseur de polyimide.

**8.** Solution de précurseur de polyimide selon l'une quelconque des revendications 1 à 7, dans laquelle la teneur en solvant organique (B) par rapport au composé amine (A) est de 1 % en masse ou plus et de 30 % en masse ou moins.

**9.** Procédé de production d'un film de polyimide poreux, comprenant :

l'application de la solution de précurseur de polyimide selon l'une quelconque des revendications 1 à 8 sur un substrat pour former un film de revêtement ;
le séchage du film de revêtement pour former un film séché ; et
la cuisson du film séché pour imider le précurseur de polyimide contenu dans le film séché pour de former un film de polyimide, et l'élimination des particules.

*FIGURE*

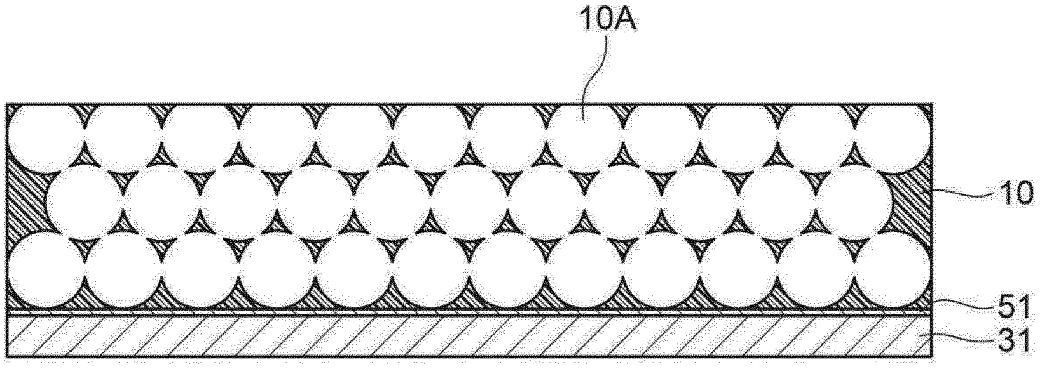

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020104105 A
- US 20210079162 A